# EUROPÄISCHE PATENTANMELDUNG

(11) **EP 1 048 546 A1**
(43) Veröffentlichungstag der Anmeldung: **02.11.2000**
(21) Anmeldenummer: 99810357.6
(22) Anmeldetag: 27.04.1999
(51) Int. Cl.: B62B 3/18

(54) **Einrichtung zur gleichzeitigen seitlichen Oeffnung der Seitenwände an Gitter-Roll-Container**

(71) Anmelder: Fink, Jean R., 3303 Jegenstorf (CH)
(72) Erfinder: Kriegel, Karl-Heinz, 06712 Hollsteitz (DE)

(57) **Zusammenfassung**

Ineinanderschachtelbare Gitterwagen mit Seitenwänden, die symmetrisch nach aussen schwenken. Am Bodenrahmen (4) sind Führungswinkeleisen (2) mit eingefrästem Führungsschlitz befestigt, die zusammenwirken mit Kurvenführungen (3), welche an Gitterwände (5) angeschweisst sind. Durch Auf- und Abbewegung des Wagenbodens (4) werden die Seitenwände (5) winklig geöffnet.

## Beschreibung

Die Erfindung hat eine Vorrichtung zum Gegenstand, welche in Gitterwagen eingebaut werden kann.

Der Zweck dieser Erfindung ist, die beiden Gitterwagenseitenwände, ohne motorischen Antrieb, symmetrisch nach aussen zu schwenken.

Diese Ausgestaltung und die vorteilhafte Weiterbindung der Erfindung ergeben sich aus den abhängigen Patentansprüchen und gehen aus der nachfolgenden Figurenbeschreibung hervor:

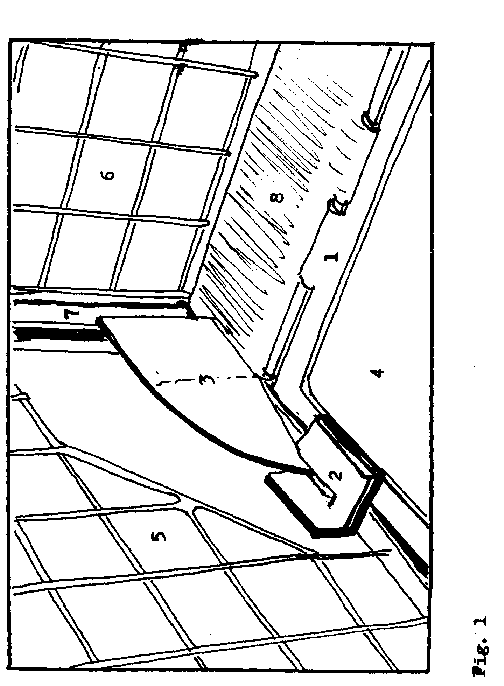

- Fig. 1: Detail Innenansicht der hinteren Zwangsführungskonstruktion (1-2-3-4-5) linke Seite mit abgesenktem Boden.

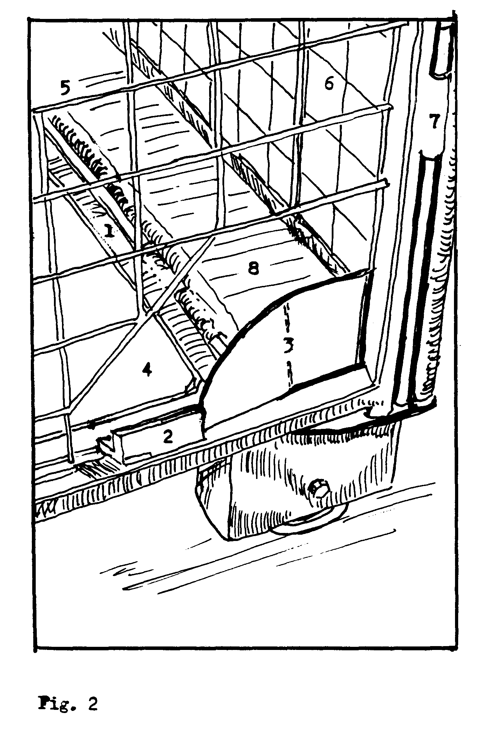

- Fig. 2: Detail Aussenansicht der hinteren Zwangsführungskonstruktion (1-2-3-4-5) rechte Seite mit abgesenktem Boden.

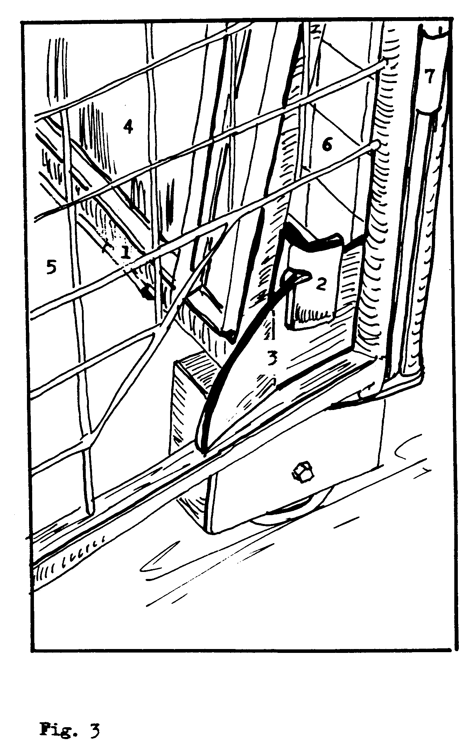

- Fig. 3: Detail Aussenansicht der hinteren Zwangsführungskonstruktion (1-2-3-4-5) rechte Seite aussen mit gehobenem Boden und seitlich winklig 12° verschobenen Gitterwagenseitenwand (1-2-3-4-5).

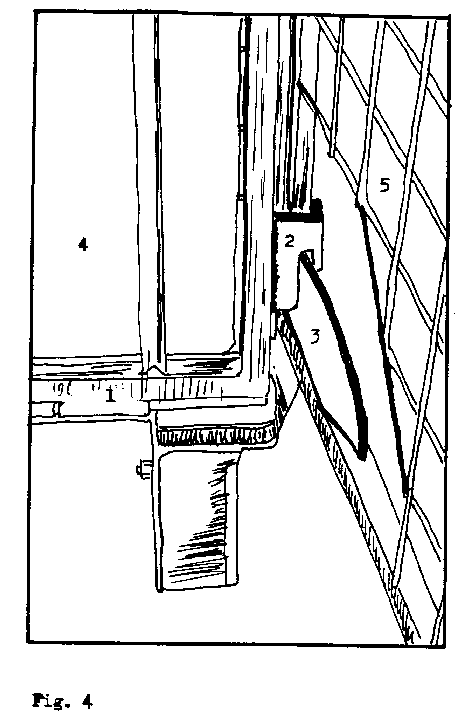

- Fig. 4: Detail Innenansicht der hinteren Zwangsführungskonstruktion (1-2-3-4-5) rechte Seite innen mit aufgeklapptem Boden und seitlich winklig verschobenen Gitterwagen-konstruktion.

Der Aufbau besteht aus folgenden Elementen:

Am Wagenboden (4) mit Scharnierbefestigung (1) sind links und rechts je ein Winkeleisen (2) 50 x 50 x 5 mm, insbesondere 60 x 60 x 6 mm angeschweisst.

Diese am Bodenrahmen befestigten Führungswinkeleisen (2) weisen in der aufgeschweissten Fläche einen eingefrästen Führungsschlitz auf.

Dieser Schlitz bewegt sich über die Kurvenführung (3), welche am vertikalen Gitterrahmenrohr (18-24 mm Durchmesser) einerseits und andererseits am Scharnierhalteeisen (1) angeschweisst ist.

Der nach oben und unten schwenkbare Boden (4) ist an einem Bodeneisen mit verschweissten Unterteilscharnieren und Rundstahl befestigt (siehe Patentgesuch Nr. 1997 0830/97).

Die beiden symmetrisch angeordneten Kurven (3) verfügen über eine gerade verlaufende Fläche zur Arretierung der linken und rechten Gitterwagen-Seitenwand (5) in geschlossenem (beladebereitem) Roll-Container.

Durch die Auf- und Abbewegung des am Bodenrahmen (1) anscharnierten Boden (4) werden die Gitterrahmen-Aussenwände (5) in ihren Scharnieren winklig (12°) geöffnet, und erlauben jetzt das platzsparende Ineinanderstapeln der Gitterroll-Container.

Die maximale seitliche Öffnungsbegrenzung wird gesichert, indem das Führungswinkeleisen (2) ohne händisches Verschieben des Bodens (4) in der Kurvenführung (3) bleibt.

Die offene (Parkierposition) oder geschlossene Beladebegrenzung der Seitenwände (5) ist ohne händische Betätigung nicht möglich.

Bei gespreizten und durch das **DESMODROM**-System offen gehaltene Seitenwände, können nun beliebig viele Gitter-Roll-Container platzsparend zusammengeschoben werden.

Das **DESMODROM**-System erlaubt bei einer Wagenlänge von 800mm, mit zehn ineinander geschobenen Wagen, auf gleicher Fläche, 50 Gitter-Roll-Container zu lagern!

Der kippbare Boden verriegelt die beiden Seitengitter in der Belade- oder Ruheposition.

## Patentansprüche

1. Die Seitenwandbegrenzung für Gitter-Roll-Container ist dadurch gekennzeichnet, dass diese durch besondere Merkmale, mit zwei symmetrisch am hinteren Wagenboden links und rechts angebrachte Lenkkurven mit Führungen, die anscharnierten, seitlichen schwenkbaren Seitenwände in zwei Endpositionen zwangsmässig führen.

2. Die Seitenwandbegrenzung, nach Anspruch 1, ist dadurch gekennzeichnet, dass die beiden Lenkkurven hälftig senkrecht eine Kröpfung von 12° nach aussen aufweisen.

3. Die Seitenwandbegrenzung, nach Ansprüchen 1 und 2, ist dadurch gekennzeichnet, dass die hintere Hälfte der Lenkkurven die Seitenwände in der Komfortposition fixiert.

4. Die Seitenwandbegrenzung, nach Ansprüchen 1 bis 3 ist dadurch gekennzeichnet, dass die vorderen, um 12° hälftig nach aussen gekröpften Lenkkurven die Seitenwände in gespreitzter Position fixieren.

5. Die Seitenwandbegrenzung, nach Ansprüchen 1 bis 4, ist dadurch gekennzeichnet, dass sich hinten links und rechts am nach oben schwenkbaren Boden die beiden Lenkkurvenführungen befinden.

6. Die Seitenwandbegrenzung, nach Ansprüchen 1 bis 5, ist dadurch gekennzeichnet, dass die beiden Lenkkurvenführungen längsförmig je einen Führungsschlitz aufweisen.

7. Die Seitenwandbegrenzung, nach Ansprüchen 1 bis 6, ist dadurch gekennzeichnet, dass die beiden geschlitzten Lenkkurvenführungen in beide Lenkkurven desmodromisch gleichzeitig eingreifen.

8. Die Seitenwandbegrenzung, nach Ansprüchen 1 bis 7, ist dadurch gekennzeichnet, dass die geschlitzten Lenkkurvenführungen auf der ganzen Länge den gekröpften und gebogenen Lenkkurven desmodromisch nachgleiten.

9. Die Seitenwandbegrenzung, nach Ansprüchen 1 bis 8, ist dadurch gekennzeichnet, dass die Lenkkurvenführungen nicht aus den Lenkkurven herausspringen können.

10. Seitenwandbegrenzung, nach Ansprüchen 1 bis 9, ist dadurch gekennzeichnet, dass bei der Fixierung der Seitenwände weder in geschlossener noch geöffneter Position, keine Begrenzungsmutter oder Klinken notwendig sind.

11. Die Seitenwandbegrenzung, nach Ansprüchen 1 bis 10, ist dadurch gekennzeichnet, dass sich das Dispositiv nur in Verbindung mit Gitter-Roll-Container verwenden lässt, welche mit an der Rückenwand angebrachten Gegenscharnieren versehen sind.

12. Die Seitenwandbegrenzung, nach Ansprüchen 1 bis 11, ist dadurch gekennzeichnet, dass durch das Ineinandergreifen der Lenkkurvenführung in die beiden Lenkkurven kein axiales Spiel in den Gegenscharnieren der Rücken- und Seitenwände besteht.

13. Die Seitenwandbegrenzung, nach Ansprüchen 1 bis 12, ist dadurch gekennzeichnet, dass die Lenkkurven mit den unteren/hinteren Seitenwandrahmen fest verbunden sind.

14. Die -Seitenwandbegrenzung, nach Ansprüchen 1 bis 13, ist dadurch gekennzeichnet, dass die vertikalen hinteren Seitenwandrahmen auf der ganzen Länge mit Gegenscharnieren zur Rückenwand verbunden sind.

15. Die Seitenwandbegrenzung, nach Ansprüchen 1 bis 14, ist dadurch gekennzeichnet, dass der schwenkbare Boden mit den befestigten Lenkkurvenführungen am Rückwandboden auf der ganzen Länge mit Gegenscharnieren ausgestattet ist.

16. Die Seitenwandbegrenzung, nach Ansprüchen 1 bis 15, ist dadurch gekennzeichnet, dass der Boden durch sein Eigengewicht beim Absenken die Seitenwände mit dem Abgleiten der Lenkkurvenführung über die Lenkkurven desmodromisch in die Komfortposition gebracht werden.

17. Die Seitenwandbegrenzung, nach Ansprüchen 1 bis 16, ist dadurch gekennzeichnet, dass das "Ineinanderschachteln" der Gitterwagen jetzt voll gewährleistet ist.
